# EUROPÄISCHE PATENTANMELDUNG

(11) **EP 2 811 232 A1**
(43) Veröffentlichungstag der Anmeldung: **10.12.2014**
(21) Anmeldenummer: 13405131.7
(22) Anmeldetag: 26.11.2013
(51) Int. Cl.: F24D 3/16, F24F 5/00, F24F 7/10, F24F 13/075

(54) **Deckenelement für eine Heiz- und Kühldecke sowie Heiz- und Kühldecke**

(30) Priorität: 29.11.2012 CH 26192012
(71) Anmelder: Barcol-Air AG, 8603 Schwerzenbach (CH)
(72) Erfinder: Hecker, Tomas, CH-8603 Schwerzenbach (CH)
(74) Vertreter: Wagner, Wolfgang Heribert

(57) **Zusammenfassung**

Ein in Längsrichtung durch das Deckenelement laufender Luftkasten (2) weist eine Reihe an einer Decke (6) angeordneter, nach derselben Seite gerichteter Ausströmöffnungen (7) auf, die jeweils zwischen zwei einer Reihe von quer zur Längsrichtung ausgerichteten Rippen (10) liegen. Das Ausströmen von Kühlluft aus den Ausströmöffnungen (7) treibt eine Luftwalze im Raum an, die aus Kühlluft und dem 20- bis 30-fachen an Raumluft besteht, sodass ohne kompakte Kaltluftströmungen hohe Kühlwirkung erzielt wird. Ein oberer Flüssigkeitskreis (14) kühlt die Rippen (10) zusätzlich und dient auch der Kühlung der Raumdecke. Ein unterer Flüssigkeitskreis (20) zwischen einer Isolationsplatte (12) und einer zum Raum hin abschliessenden Lochplatte (13) kann zur Strahlungskühlung eingesetzt werden.

## Beschreibung

### Technisches Gebiet

Die Erfindung betrifft ein Deckenelement für eine Heiz- und Kühldecke sowie eine Heiz- und Kühldecke, welche mindestens ein derartiges Deckenelement umfasst.

### Stand der Technik

Es sind verschiedene Deckelemente bekannt, bei denen Kühlluft zugeführt und direkt nach unten in den zu kühlenden Raum geleitet wird. Ein solches Deckelement ist aus CH 695 835 A5 bekannt. Bei Deckenelementen dieser Art besteht immer die Gefahr, dass sich verhältnismässig kompakte Kaltluftströmungen im Raum ausbilden, welche die Behaglichkeit stören und auch die Gesundheit von Personen, die sich lange Zeit im Raum aufhalten, gefährden können.

Dies kann etwa dadurch verhindert werden, dass die Luftströmung begrenzt wird, z.B. durch eine Lochplatte mit geringem freien Querschnitt und kleinen Oeffnungen, wie dies in WO 05/23 395 A1 vorgeschlagen wurde. Eine solche Massnahme begrenzt jedoch die erreichbare Kühlleistung.

### Darstellung der Erfindung

Der Erfindung liegt die Aufgabe zu Grunde, ein Deckenelement anzugeben, bei dem Kühlluft so zugeführt wird, dass sich keine störenden kompakten Kaltluftströmungen ausbilden, die aber gleichwohl eine hohe Kühlleistung bietet. Ausserdem soll eine Heiz- und Kühldecke angegeben werden, welche ebenfalls diese Eigenschaften aufweist.

Diese Aufgabe wird durch die Erfindung, wie sie in den Ansprüchen gekennzeichnet ist, gelöst.

Das erfindungsgemässe Deckenelement erlaubt den Aufbau von Kühldecken, bei denen die zugeführte Kühlluft nicht direkt nach unten in den zu kühlenden Raum strömt, sondern eine Luftwalze antreibt, in der sie sich rasch mit einem Vielfachen an Raumluft vermischt, sodass die zugeführte Kühlluft keine kompakten Kaltluftströmungen bilden kann. Auf diese Weise kann eine hohe Kühlleistung erzielt werden, ohne dass unangenehme Zugerscheinungen aufträten.

Bei Ausbildung des erfindungsgemässen Deckenelements mit einem oberen Flüssigkeitskreis ist es auch möglich, die Raumdecke, in der Regel eine Betondecke, stärker in die Kühlung einzubeziehen, indem sie als Wärmespeicher genutzt wird.

Das erfindungsgemässe Deckenelement kann so weitergebildet sein, dass es ausserdem einen Flüssigkeitskreis für die direkte Raumkühlung umfasst, welcher zur zusätzlichen Strahlungskühlung des Raumes dient und auch dazu herangezogen werden kann, die Nutzung der Raumdecke für die Kühlung zu verstärken.

### Kurze Beschreibung der Zeichnungen

Im folgenden wird die Erfindung anhand von Figuren, welche lediglich ein Ausführungsbeispiel darstellen, näher erläutert. Es zeigen
- Fig. 1: eine erfindungsgemässe Heiz- und Kühldecke mit zwei in einer Reihe angeordneten erfindungsgemässen Deckenelementen, eines davon in Explosionsdarstellung,
- Fig. 2: vergrössert einen Ausschnitt aus einer schrägen Draufsicht auf ein erfindungsgemässes Deckenelement der erfindungsgemässen Heiz- und Kühldecke,

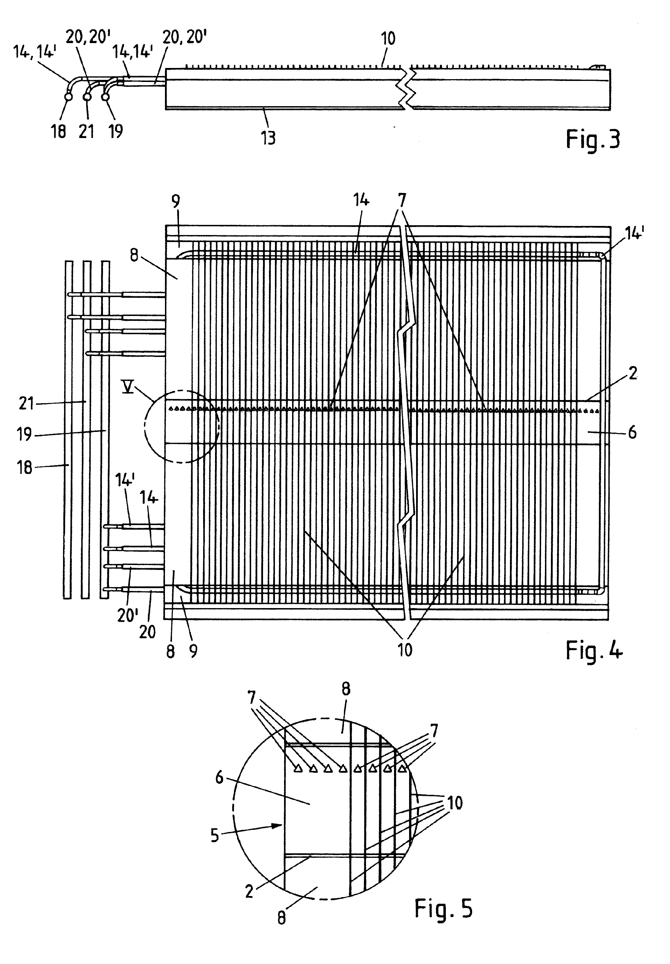

- Fig. 3: eine Seitenansicht des erfindungsgemässen Deckenelements,
- Fig. 4: eine Draufsicht auf das erfindungsgemässe Deckenelement,
- Fig. 5: vergrössert den Ausschnitt V aus Fig. 4,

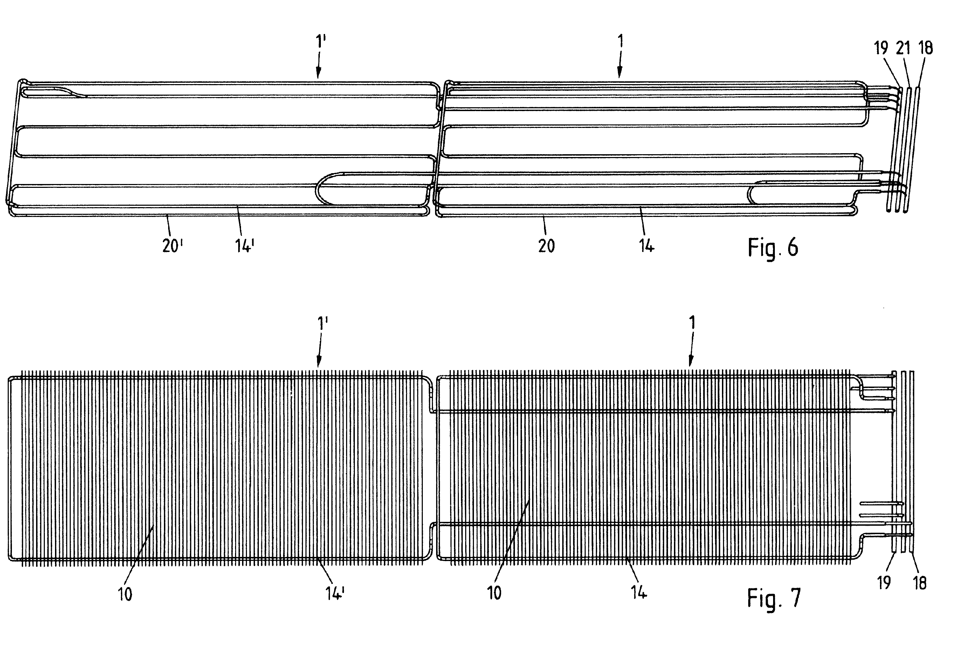

- Fig. 6: eine schräge Draufsicht auf Flüssigkeitskreise der erfindungsgemässen Heiz- und Kühldecke,
- Fig. 7: eine Draufsicht auf einen oberen Teil der erfindungsgemässen Heiz- und Kühldecke mit einem oberen Flüssigkeitskreis,
- Fig. 8: eine Draufsicht auf einen unteren Teil der erfindungsgemässen Heiz- und Kühldecke mit einem unteren Flüssigkeitskreis,
- Fig. 9: eine schematische Darstellung der Flüssigkeitskreise der erfindungsgemässen Heiz- und Kühldecke bei einer ersten Betriebsweise,
- Fig. 10: eine schematische Darstellung der Flüssigkeitskreise der erfindungsgemässen Heizund Kühldecke bei einer zweiten Betriebsweise und
- Fig. 11: eine schematische Darstellung der Flüssigkeitskreise der erfindungsgemässen Heizund Kühldecke bei einer dritten Betriebsweise.

### Wege zur Ausführung der Erfindung

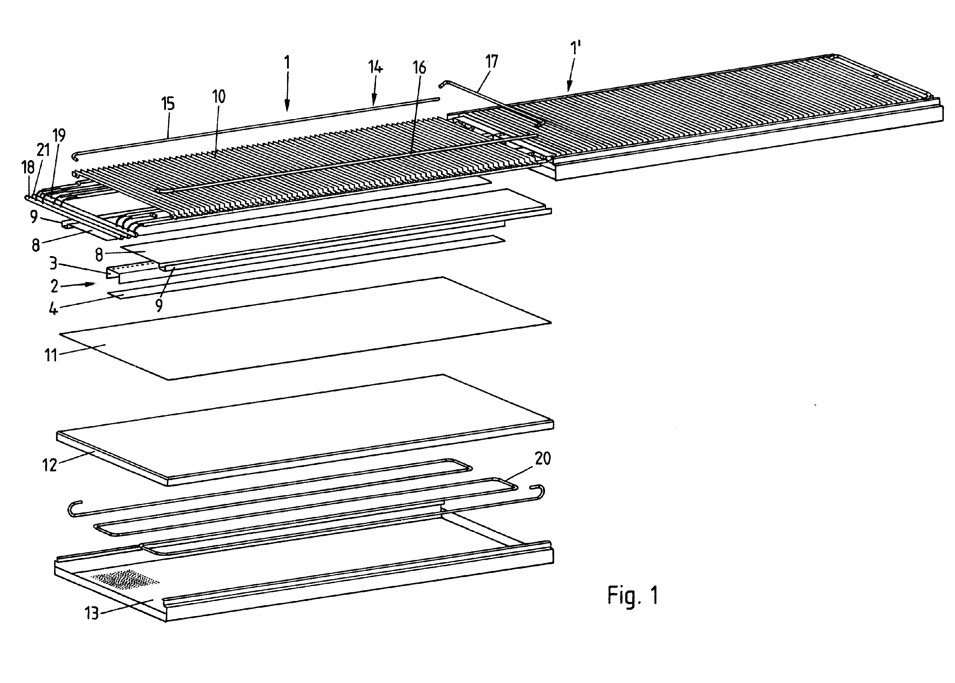

Die erfindungsgemässe Heiz- und Kühldecke besteht im Beispiel (Fig. 1) aus zwei hintereinander, d.h. in einer Reihe angeordneten erfindungsgemässen Deckenelementen 1, 1', welche im wesentlichen gleich ausgebildet sind. Sie eignet sich zur Kühlung und bei Bedarf auch zur Heizung eines kleineren Raums. Die Heiz- und Kühldecke umfasst vorzugsweise eine Reihe von Deckenelementen, die auch länger sein kann als dargestellt, doch kann sie auch mehrere vorzugsweise parallele Reihen umfassen, die dann jedoch seitlich voneinander deutlich beabstandet sein sollten, damit die Luftströmung nicht behindert wird.

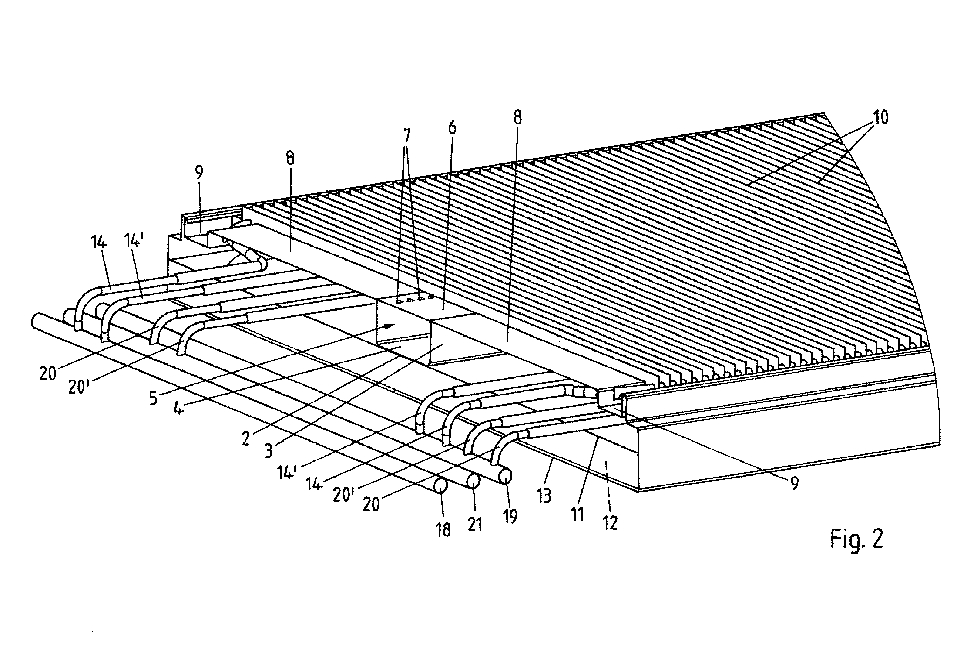

Das erfindungsgemässe Deckelement 1 ist jeweils von rechteckiger Grundfläche und weist einen in einer Längsrichtung durchgehenden länglichen Luftkasten 2 auf, welcher im Beispiel aus einem nach unten offenen U-Profil 3 und einem Boden 4 besteht. Das vom Luftkasten 2 umschlossene Luftvolumen hat somit die Form eines Luftkanals 5 (Fig. 2). Der Luftkasten 2 des Deckenelements 1 schliesst an einen an einem linken Ende desselben vorbeigeführten Verteilkasten (nicht dargestellt) an. An sein äusseres Ende schliesst der Luftkasten 2 des weiteren Deckenelements 1' unmittelbar an. Dieser ist an seinem äusseren Ende verschlossen.

Der obere Teil des U-Profils 3 bildet eine waagrechte Decke 6 des Luftkanals 5, an dem in Längsrichtung aufeinanderfolgende gestanzte Ausströmöffnungen 7 angebracht sind, welche alle nach der gleichen Seite (in Fig. 1 und 2 schräg nach vorn) offen und gerichtet sind. Beidseits neben dem Luftkasten 2 ist der verbleibende Raum jeweils durch einen Deckel 8 verschlossen, der einen ebenen Teil, der in der gleichen Ebene liegt wie die Decke 6, umfasst und am Rand des Deckenelements eine Rinne 9 bildet. Ueber die Oberseite der Decke 6 und der Deckel 8 laufen in Querrichtung im wesentlichen durchgehende Rippen 10, welche in Längsrichtung regelmässig und mit geringem Abstand aufeinanderfolgen, derart, dass zwischen zwei aufeinanderfolgenden Rippen 10 jeweils eine der Ausströmöffnungen 7 liegt.

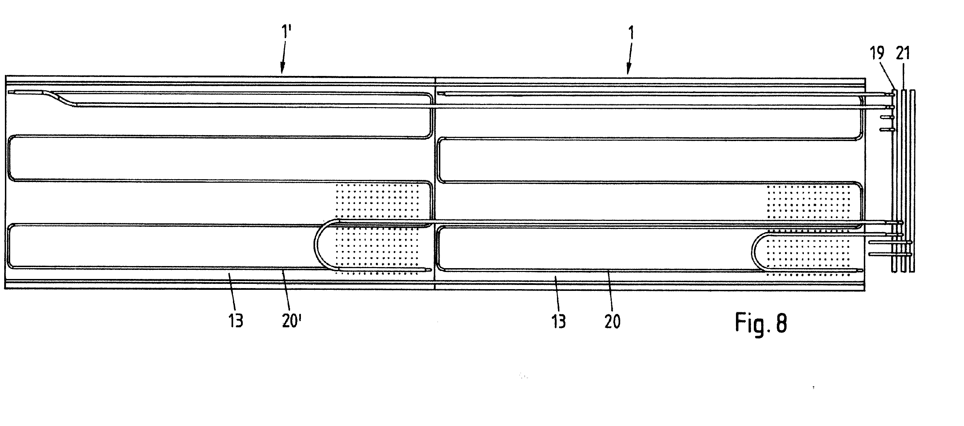

Unterhalb des Luftkastens 2 ist eine durchgehende Platte 11 aus Metall, vorzugsweise Aluminium angeordnet, auf welche eine Isolationsschicht folgt, die als Matte oder vorzugsweise als Isolationsplatte 12 aus einem thermisch isolierenden Material, z.B. aus Steinwolle oder einem vorzugsweise offenporigen Schaumstoff, ausgebildet ist und welche gleichzeitig der Geräuschdämpfung dient. An der Unterseite wird das Deckenelemnt 1 von einer durchgehenden Lochplatte 13 (die Lochung ist in Fig. 1 und 8 jeweils nur an einem Teil der Fläche gezeigt) abgeschlossen, welche über seitliche Befestigungsflansche an senkrechten Randstreifen der Deckel 8 aufgehängt ist.

Das Deckenelement 1 weist auch einen oberen Flüssigkeitskreis 14 auf, der aus Rohren, vorzugsweise Kupferrohren, und Schläuchen zusammengesetzt ist und eine Schleife bildet mit einem ersten in Längsrichtung verlaufenden geraden Rohr 15, das in einer der Rinnen 9 durch fluchtende Oeffnungen in den Rippen 10 geführt ist und einem zweiten geraden Rohr 16, welches in der anderen Rinne 9 am gegenüberliegenden Rand des Deckenelements in gleicher Weise geführt ist, derart, dass der obere Flüssigkeitskreis 14 durch Oeffnungen an den gegenüberliegenden Enden jeder der Rippen 10 läuft. Die beiden geraden Rohre 15, 16 sind durch einen querverlaufenden ebenfalls im wesentlichen geraden Verbindungsschlauch 17 am äusseren Ende des Deckenelements 1 verbunden. Sie sind jeweils mit den Rändern der Oeffnungen in den Rippen 10 in Kontakt, vorzugsweise in sie eingepresst, derart, dass sie mit diesen in enger wärmeleitender Verbindung stehen. Der obere Flüssigkeitskreis 14 verbindet einen oberen Zuleitungsanschluss an einem Deckenvorlauf 18 mit einem oberen Ableitungsanschluss an einem Rücklauf 19.

Ein unterer Flüssigkeitskreis 20 umfasst ein mäanderförmiges Rohr, welches zwischen der Isolationsplatte 12 und der Lochplatte 13 angeordnet ist und mit letzterer in enger wärmeleitender Verbindung steht. Es kann auf die Lochplatte 13 lediglich aufgelegt oder auch mit ihr verklebt oder auf andere Weise verbunden sein. Der untere Flüssigkeitskreis 20 verbindet einen unteren Zuleitungsanschluss an einem Raumvorlauf 21 mit einem unteren Ableitungsanschluss am Rücklauf 19. Das weitere Deckenelement 1' weist einen ganz ähnlichen oberen Flüssigkeitskreis 14' auf, der lediglich zusätzliche Verbindungsschläuche umfasst, welche in Längsrichtung durch das erste Deckenelement 1 laufen, desgleichen einen unteren Flüssigkeitskreis 20', der ebenfalls längere Verbindungsschläuche umfasst.

Der Deckenvorlauf 18, der Rücklauf 19 und der Raumvorlauf 21 laufen, parallel zum nicht dargestellten Verteilkasten für die Kühlluft, in Querrichtung durch und dienen gewöhnlich dazu, mehrere Reihen von Deckenelementen, welche auch zu verschiedenen Heiz- und Kühldecken gehören, d.h. in verschiedenen Räumen angeordnet sein können, mit Wärmeträgermedium, gewöhnlich Wasser oder Sole, zu versorgen. Sie können jeweils an einem entfernten Ende verschlossen sein. Die Deckenelemente 1, 1' einer Reihe können wie dargestellt parallel mit dem Deckenvorlauf 18, dem Rücklauf 19 und dem Raumvorlauf 21 verbunden sein, was zu einer besonders gleichmässigen Kühl- oder Heizwirkung führt, doch ist auch eine Verbindung in Reihe möglich.

Die Deckenelemente 1, 1' sind knapp unterhalb einer Raumdecke - in der Regel einer Betondecke angebracht, vorzugsweise direkt an deren Unterseite, derart, dass die oberen Enden der Rippen 10 die Raumdecke berühren oder sonst in engem wärmeleitenden Kontakt mit ihr stehen. Dazu kann etwa auch eine Deckplatte aus Metall vorgesehen sein, die auf den Rippen aufliegt und mit ihnen verbunden und mit der Raumdecke ebenfalls thermisch eng gekoppelt, z.B. mittels eines gut wärmeleitenden Klebstoffs mit ihr verklebt ist. Die Decke 6 des Luftkastens liegt dabei vorzugsweise ca. 2cm bis 5cm unterhalb der Raumdecke oder gegebenenfalls der Deckplatte. Die Zwischenräume zwischen zwei benachbarten Rippen 10 bilden so jeweils einen Kanal, in dem eine der Ausströmöffnungen 7 liegt.

Wird Kühlluft aus dem Verteilkanal in den Luftkanal 5 geleitet, so strömt sie aus den Ausströmöffnungen 7 an der Decke 6 des Luftkastens 2 aus und in diese Kanäle, wo sie eine Luftströmung in Querrichtung erzeugt, welche in allen Kanälen die gleiche Richtung nach einem Rand des Deckenelements 1, 1' hat (in Fig.1 und 2 schräg nach vorn rechts). Dadurch wird am gegenüberliegenden Rand Raumluft in die Kanäle gezogen und im zu kühlenden Raum eine Luftwalze erzeugt und aufrechterhalten, welche eine leichte, aus der zugeführten Kaltluft und dem etwa 20- bis 30-fachen an mitbewegter Raumluft bestehende Strömung bildet, die den Raum mit hoher Kühlleistung, aber ohne störende kompakte Kaltluftströme kühlt.

Die Kühlwirkung kann verstärkt werden, indem Kühlflüssigkeit durch die oberen Flüssigkeitskreise 14, 14' geleitet wird. Dadurch werden die Deckel 8 und vor allem die Rippen 10 gekühlt, sodass die Luft, die durch die von den Rippen 10 seitlich begrenzten Kanäle strömt, durch den Kontakt mit den Rippen 10 und den Deckeln 8 zusätzlich gekühlt wird.

Eine weitere Verstärkung der Kühlwirkung kann erzielt werden, indem Kühlflüssigkeit durch die unteren Flüssigkeitskreise 20, 20' geleitet wird. Dadurch wird jeweils die Lochplatte 13 gekühlt, was eine zusätzliche Kühlung des darunterliegenden Raumes durch Strahlungsaustausch bewirkt.

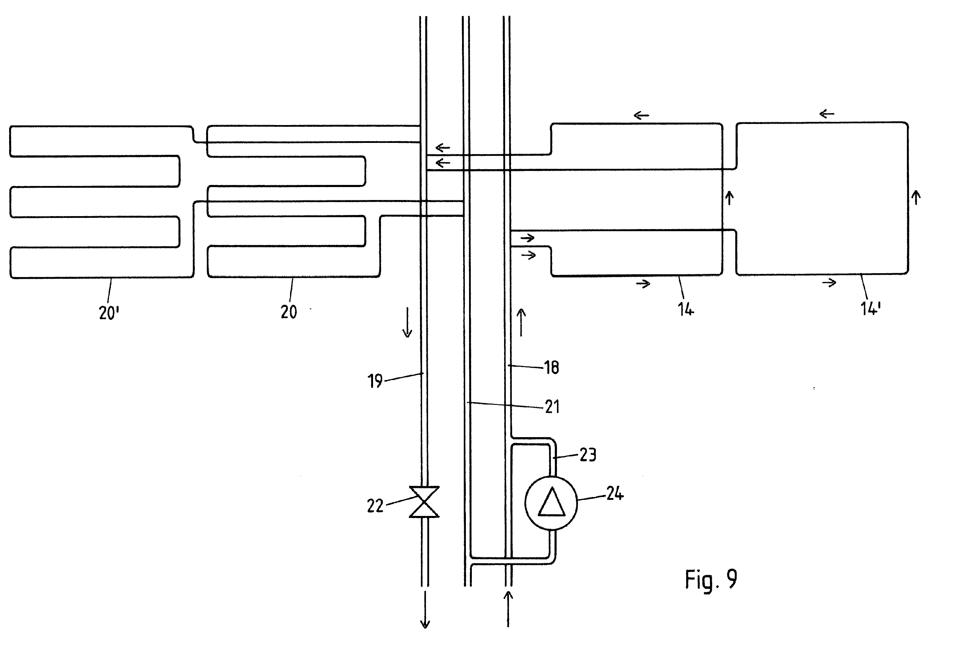

Die oberen und unteren Flüssigkeitskreise bieten jedoch auch die Möglichkeit, die thermische Trägheit der Raumdecke zu nutzen (Betonkernkühlung). Die möglichen Betriebsweisen hinsichtlich des Einsatzes der oberen Flüssigkeitskreise 14, 14' und der unteren Flüssigkeitskreise 20, 20' sind in Fig. 9-11 schematisch dargestellt. Dabei ist zusätzlich ein Ventil 22 im Rücklauf 19 gezeigt, mit welchem dieser gesperrt werden kann sowie eine Verbindungsleitung 23 zwischen dem Raumvorlauf 21 und dem Deckenvorlauf 18 mit einer Pumpe 24.

Bei der in der in Fig. 9 dargestellten Betriebsweise ist das Ventil 22 offen. Kühlflüssigkeit wird in den Deckenvorlauf 18 geleitet und fliesst durch die oberen Flüssigkeitskreise 14, 14' zum Rücklauf 19. Dies kann wie oben beschrieben während Zeiten hoher Wärmebelastung zusätzlich zur Luftkühlung erfolgen, die dadurch verstärkt wird. Es ist aber auch möglich, während Zeiten geringer Wärmebelastung, vor allem in der Nacht, mit oder ohne zusätzliche Kühlluftzufuhr, Kühlflüssigkeit durch die oberen Flüssigkeitskreise 14, 14' zu leiten und über die wärmeleitende Verbindung der Rippen 10 mit der Raumdecke die letztere zu kühlen.

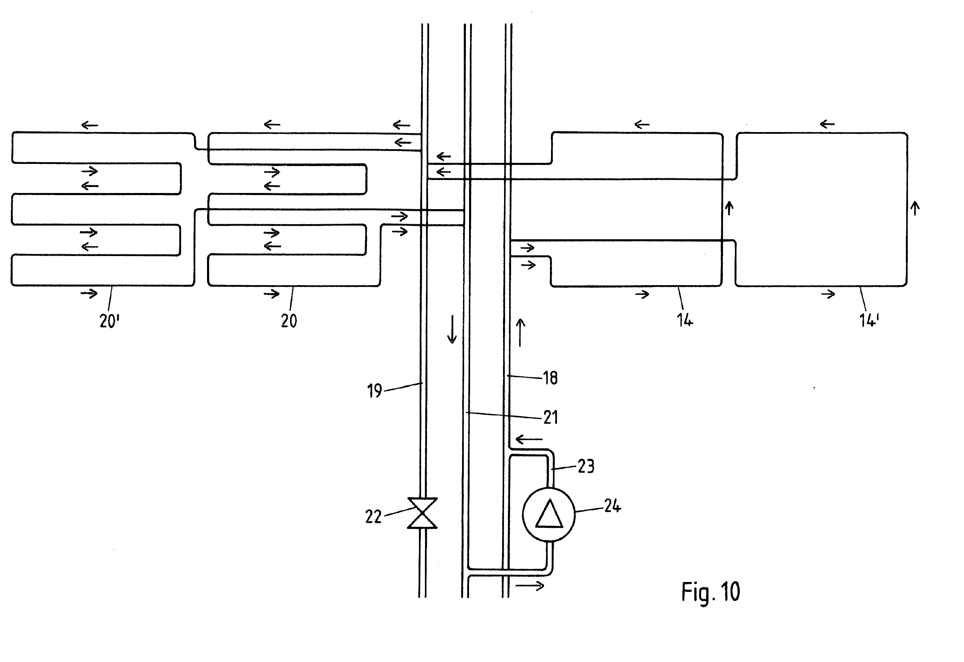

Zu Betriebszeiten trägt dann die kalte Raumdecke zur Abkühlung der Kühlluft in den Kanälen zwischen den Rippen 10 bei. In Zeiten höherer Wärmebelastung kann aber die kalte Raumdecke zusätzlich zur Strahlungskühlung des Raumes eingesetzt werden. Dazu ist, wie in Fig. 10 dargestellt, das Ventil 22 geschlossen und die Pumpe 24 in Betrieb. In diesem Fall wird Kühlflüssigkeit durch die oberen Flüssigkeitskreise 14, 14' geleitet, wo sie sich durch Wärmeaustausch mit der Raumdecke über die Rippen 10 abkühlt und weiter durch die unteren Flüssigkeitskreise 20, 20', wo sie die Lochplatte 13 kühlt, die dann über Strahlungswechselwirkung den Raum kühlt. Die Strömungsrichtung kann auch umgekehrt sein.

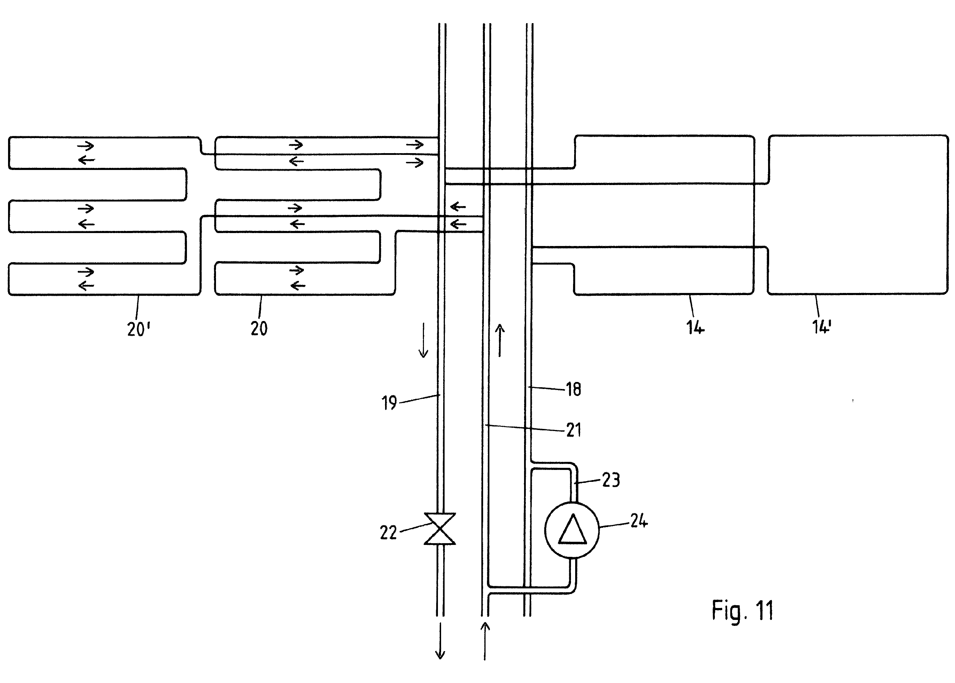

Bei sehr hoher Wärmebelastung oder wenn die Raumdecke bereits zu warm geworden ist, um noch ausreichend Wärme aufzunehmen, kann auch, wie in Fig. 11 dargestellt, Kühlflüssigkeit über den Raumvorlauf 21 zugeführt und durch die unteren Flüssigkeitskreise 20, 20' zum Rücklauf 19 geleitet werden. Das Ventil 22 ist dann offen und die Pumpe 24 nicht in Betrieb.

Es sind auch Kombinationen dieser Betriebsweisen möglich. So kann etwa Kühlflüssigkeit zugleich durch den Deckenvorlauf 18 und den Raumvorlauf 21 zugeführt und parallel durch die oberen Flüssigkeitskreise 14, 14' und die unteren Flüssigkeitskreise 20, 20' zum Rücklauf 19 geleitet werden, sodass zugleich eine Verstärkung der Luftkühlung durch die oberen Flüssigkeitskreise 14, 14' als auch eine zusätzliche Strahlungskühlung durch die unteren Flüssigkeitskreise 20, 20' stattfindet.

Die in den schematischen Darstellungen von Fig. 9, 10 und 11 in ihrem grundsätzlichen Aufbau dargestellte Kühldecke kann u.U. unabhängig von den Einzelheiten der Deckenelemente vorteilhaft verwendet werden, wenn diese einen Raumkühlkreis aufweisen, z.B. auch in dem Fall, dass ein oberer Flüssigkeitskreis direkt in der Raumdecke eingebettet ist.

Obwohl erfindungsmässe Deckenelemente vor allem zur Kühlung eingesetzt werden, ist ein Einsatz zu Heizzwecken ebensogut möglich. Dabei können die gleichen Betriebsweisen eingesetzt und auch die Raumdecke als Wärmespeicher genutzt werden.

Das erfindungsgemässe Deckenelement und die erfindungsgemässe Heiz- und Kühldecke bieten bei verhältnismässig einfachem Aufbau eine Vielzahl von Einsatzmöglichkeiten. Sie können zur Luftkühlung wie zur Strahlungskühlung eingesetzt werden. Die Luftkühlung kann durch Flüssigkeitskühlung verstärkt werden. Es ist möglich, Betonkernkühlung einzusetzen und diese sowohl für die Luftkühlung als auch für die Strahlungskühlung zu nutzen. Die Betriebsweise kann damit äusserst flexibel an die gegebenen Bedingungen angepasst und hinsichtlich verschiedener Parameter wie Kühlleistung, Luftzufuhr und Energieverbrauch eingestellt werden.

### Bezugszeichenliste

- 1, 1': Deckenelement
- 2: Luftkasten
- 3: U-Profil
- 4: Boden
- 5: Luftkanal
- 6: Decke
- 7: Ausströmöffnung
- 8: Deckel
- 9: Rinne
- 10: Rippe
- 11: Platte
- 12: Isolationsplatte
- 13: Lochplatte
- 14, 14': obere Flüssigkeitskreise
- 15, 16: Rohre
- 17: Verbindungsschlauch
- 18: Deckenvorlauf
- 19: Rücklauf
- 20, 20': untere Flüssigkeitskreise
- 21: Raumvorlauf
- 22: Ventil
- 23: Verbindungsleitung
- 24: Pumpe

## Patentansprüche

1. Deckenelement (1) für eine Heiz- und Kühldecke, mit einem ein Luftvolumen umschliessenden, sich in eine Längsrichtung erstreckenden Luftkasten (2), welcher an einem Ende einen Zuluftanschluss aufweist und an einer Oberseite eine das Luftvolumen begrenzende Decke (6), **dadurch gekennzeichnet, dass** an der Decke (6) mehrere nach derselben Seite quer zur Längsrichtung gerichtete vom Luftvolumen ausgehende Ausströmöffnungen (7) angeordnet sind.

2. Deckenelement nach Anspruch 1, **dadurch gekennzeichnet, dass** es an der Oberseite eine Vielzahl von quer zur Längsrichtung verlaufenden Rippen (10) aufweist, welche in Längsrichtung mit Abstand aufeinanderfolgen und sich mindestens über die Decke (6) des Luftkastens (2) erstrecken.

3. Deckenelement nach Anspruch 2, **dadurch gekennzeichnet, dass** zwischen zwei aufeinanderfolgenden Rippen (10) jeweils eine Ausströmöffnung (7) angeordnet ist.

4. Deckenelement nach einem der Ansprüche 1 bis 3, **dadurch gekennzeichnet, dass** der Luftkasten (2) sich vorwiegend in die Längsrichtung erstreckt, derart, dass das Luftvolumen einen länglichen Luftkanal (5) bildet und die Ausströmöffnungen (7) in Längsrichtung aufeinanderfolgend in einer Reihe angeordnet sind.

5. Deckenelement nach einem der Ansprüche 2 bis 4, **dadurch gekennzeichnet, dass** es mindestens einen von einem flüssigen Wärmeträgermedium durchströmbaren, einen oberen Zuleitungsanschluss mit einem oberen Ableitungsanschluss verbindendes oberen Flüssigkeitskreis (14) aufweist, welcher mit den Rippen (10) in enger wärmeleitender Verbindung steht.

6. Deckenelement nach Anspruch 5, **dadurch gekennzeichnet, dass** der obere Flüssigkeitskreis (14) in Längsrichtung verlaufende, durch Oeffnungen in den Rippen (10) geführte Rohre (15, 16) umfasst, welche mit den Rändern der Oeffnungen in Kontakt sind.

7. Deckenelement nach Anspruch 6, **dadurch gekennzeichnet, dass** die Rohre (15, 16) gerade sind.

8. Deckenelement nach Anspruch 5 bis 7, **dadurch gekennzeichnet, dass** der obere Flüssigkeitskreis (14) eine Schleife bildet, welche zwei Mal durch jede Rippe (10) geführt ist.

9. Deckenelement nach einem der Ansprüche 1 bis 8, **dadurch gekennzeichnet, dass** es eine Isolationsschicht aus thermisch isolierendem Material aufweist, welche unterhalb des Luftkastens (2) angeordnet ist sowie einen unterhalb der Isolationsschicht angeordneten Flüssigkeitskreis (20), welcher einen unteren Zuleitungsänschluss mit einem unteren Ableitungsanschluss verbindet.

10. Deckenelement nach Anspruch 9, **dadurch gekennzeichnet, dass** der untere Flüssigkeitskreis (20) ein mäanderförmiges Rohr umfasst.

11. Deckenelement nach Anspruch 9 oder 10, **dadurch gekennzeichnet, dass** es an einer Unterseite eine Lochplatte (13) aufweist, mit welcher der untere Flüssigkeitskreis (20) in enger wärmeleitender Verbindung steht.

12. Heiz-oder Kühldecke, welche mindestens ein Deckenelement (1, 1') nach einem der Ansprüche 1 bis 11 umfasst, **dadurch gekennzeichnet, dass** das mindestens eine Deckenelement (1, 1') derart unterhalb einer Raumdecke angeordnet ist, dass die Decke (6) des Luftkastens (2) von derselben einen Abstand von zwischen 2cm und 5cm aufweist.

13. Heiz- oder Kühldecke nach Anspruch 12, mit einem Deckenelement (1, 1') nach einem der Ansprüche 2 bis 11, **dadurch gekennzeichnet, dass** die Rippen (10) mit der Raumdecke in enger wärmeleitender Verbindung stehen.

14. Heiz- oder Kühldecke nach Anspruch 13, **dadurch gekennzeichnet, dass** obere Enden der Rippen (10) an der Raumdecke anliegen.

15. Heiz- oder Kühldecke nach einem der Ansprüche 12 bis 14, **dadurch gekennzeichnet, dass** sie aus mehreren in einer Reihe angeordneten Deckenelementen (1, 1') besteht.
